# FASCICULE DE BREVET EUROPEEN

(11) **EP 4 263 002 B1**
(45) Date de publication et mention de la délivrance du brevet: **20.08.2025**
(21) Numéro de dépôt: 21835287.0
(22) Date de dépôt: 10.12.2021
(51) Int. Cl.: A62C 3/16, A62C 3/07, A62C 35/10, A62C 37/11, A62C 37/12

(54) **BOUCHON THERMOFUSIBLE**
HEISSSCHMELZENDE KAPPE
HOT-MELT CAP

(30) Priorité: 18.12.2020 FR 2013721
(43) Date de publication de la demande: 25.10.2023
(73) Titulaire: Ampere SAS, 92100 Boulogne-Billancourt (FR)
(72) Inventeur: CHAUDOY, Victor, 78084 GUYANCOURT Cedex (FR); TOURRET, Thierry, 78084 GUYANCOURT Cedex (FR)
(74) Mandataire: Renault Group
(86) Numéro de dépôt international: PCT/EP2021/085309
(87) Numéro de publication internationale: WO 2022/128824

(56) Documents cités:
- EP-A1- 2 556 857
- CN-A- 111 450 448

## Description

La présente invention porte sur un dispositif d'extinction d'un feu, et plus particulièrement sur un dispositif d'extinction d'un feu au sein d'un dispositif de stockage électrique d'un véhicule.

Les dispositifs de stockage électrique, autrement appelés batteries, sont couramment utilisés au sein de véhicules hybrides et/ou électriques. De tels dispositifs de stockage permettent par exemple d'alimenter en énergie électrique un moteur électrique embarqué au sein du véhicule automobile. Cependant, les batteries peuvent potentiellement prendre feu, par exemple, dans le cas d'un incendie d'un véhicule, à titre d'exemple en cas de vandalisme du véhicule ou à la suite d'un accident de la circulation. Le phénomène d'emballement thermique des cellules électrochimiques présentent à l'intérieur de la batterie peut donc potentiellement être déclenché à cause de la présence d'un très fort dégagement de chaleur à proximité des batteries, par exemple lors d'un incendie du véhicule.

On connait ainsi l'utilisation de dispositif d'extinction d'un feu se développant au sein du dispositif de stockage électrique, comprenant au moins une bouteille remplie d'au moins un gaz apte à stopper la propagation du feu. Notamment, le document EP2556857A1 divulgue une bouteille de gaz dont un opercule de fermeture est percé au moyen d'une aiguille, l'aiguille étant actionnée sous l'effet de la fonte d'un organe thermosensible qui la retient.

Un des inconvénients d'un tel dispositif d'extinction évoqué ci-dessus réside notamment dans le fait que sa mise en œuvre est couteuse et nécessite une maintenance et un entretien régulier. Le but de la présente invention est donc de simplifier l'utilisation des dispositifs d'extinction en rendant leur actionnement, c'est-à-dire la libération du gaz apte à stopper la propagation du feu, uniquement mécanique et en réduisant le nombre de pièces nécessaire à cet actionnement.

L'invention porte donc sur un dispositif d'extinction d'un feu dans un dispositif de stockage électrique d'un véhicule, le dispositif d'extinction comprenant au moins un bouchon et une bouteille contenant au moins un gaz d'extinction du feu, la bouteille comprenant un opercule de fermeture et délimitant un volume contenant le gaz, le bouchon comprenant au moins un dispositif de percement, le dispositif d'extinction étant caractérisé en ce que le dispositif de percement est en un matériau au moins partiellement thermofusible, le bouchon étant apte à être solidarisé à la bouteille de telle sorte que le dispositif de percement rompt l'opercule de fermeture de ladite bouteille et que le bouchon ferme hermétiquement le volume de la bouteille.

Le dispositif d'extinction du feu au sein du dispositif de stockage électrique, autrement dit des batteries, peut être utilisé avec un véhicule automobile électrique et/ou hybride, mais aussi en stockage stationnaire. De telles batteries permettent notamment de fournir une énergie électrique à un moteur électrique logé au sein du véhicule, assurant ainsi le déplacement de ce dernier. Le dispositif d'extinction a alors pour fonction de lutter contre la propagation d'un incendie au sein du dispositif de stockage électrique. Pour ce faire, le dispositif d'extinction comprend au moins la bouteille de gaz et le bouchon qui permet de fermer hermétiquement le volume de la bouteille tout en autorisant la sortie du gaz sous l'effet d'au moins un paramètre environnemental, ici la température de l'air dans le dispositif de stockage électrique.

On comprend alors que le dispositif de percement du bouchon est apte d'une part à rompre l'opercule de fermeture, libérant le gaz contenu dans le volume de la bouteille, et d'autre part à bloquer l'évacuation de ce gaz hors de la bouteille, c'est-à-dire vers l'environnement extérieur dudit volume. Une telle herméticité du volume de la bouteille est alors assurée au moins en partie par le dispositif de percement.

Le dispositif de percement comprend au moins un corps et une pointe comprenant tous deux un matériau thermofusible.

On comprend ici que la pointe a pour fonction de rompre l'opercule de fermeture de la bouteille de gaz et est configurée pour s'étendre au moins en partie dans le volume de la bouteille, une fois l'opercule de fermeture rompu. On comprend par ailleurs que la pointe, lorsqu'elle s'étend dans le volume de la bouteille participe à fermer de manière étanche le volume de ladite bouteille, en combinaison avec le corps.

On entend alors par matériau thermofusible le fait que ledit matériau est sensible à la chaleur. Dit autrement, le matériau thermofusible est apte à changer d'état sous l'effet de la chaleur et notamment de passer de l'état solide à l'état liquide. En d'autres termes, le dispositif de percement est apte à fondre sous l'effet de la chaleur, au moins à partir d'une température seuil, par exemple 80°C.

Selon des exemples non limitatifs de l'invention, le corps et la pointe peuvent être fait de polyéthylène, et/ou de polypropylène, et/ou de polyamide, et/ou de poly téréphtalate de butylène, et/ou de Poly Acrylonitrile butadiène styrène.

Le bouchon comprend une base pourvue d'une paroi ajourée apte au passage du gaz, la base comprenant au moins un matériau thermorésistant, la paroi ajourée étant disposée autour du corps du dispositif de percement et la base comprenant au moins un moyen de fixation du bouchon à la bouteille.

La base du bouchon participe alors à maintenir le dispositif de percement en position sur la bouteille, de telle sorte que ce dernier assure l'herméticité de ladite bouteille. On comprend par matériau thermorésistant le fait que la base est apte à résister à des températures élevées, notamment supérieures à la température de fusion du matériau thermofusible constitutif du dispositif de percement. Dit autrement, la base présente une température de fusion par exemple supérieure à 250°C. Selon un exemple de l'invention, l'intégralité de la base est formée du matériau thermorésistant.

Selon des exemples non limitatifs de l'invention, le matériau thermorésistant peut être une matière synthétique de type polyétheréthercétone, et/ou polyimide et/ou de l'époxy.

On entend par paroi ajourée le fait que celle-ci comprend au moins une fenêtre formée dans son épaisseur, de manière à mettre en communication un volume interne de la base avec l'environnement extérieur de celle-ci. On comprend alors qu'à la suite de la fonte d'au moins une partie du dispositif de percement, la paroi ajourée autorise le passage du gaz depuis le volume de la bouteille jusqu'à l'environnement extérieur de la bouteille. Selon un exemple de l'invention, la paroi peut comprendre une pluralité de fenêtres qui s'étendent périphériquement autour de la base.

Le moyen de fixation s'étend en périphérie de la pointe du dispositif de percement.

La base comprend au moins une paroi de fixation disposée autour de la pointe du dispositif de percement, le moyen de fixation du bouchon étant un filetage formé sur la paroi de fixation apte à coopérer avec un filetage complémentaire formé sur la bouteille.

La paroi ajourée est prolongée par une paroi de fixation qui comprend le moyen de fixation, ici le filetage, par exemple interne ou externe. Selon un exemple, la paroi de fixation comprend une face interne, tournée vers la pointe du dispositif de percement, le filetage interne étant formé sur ladite face interne de la paroi de fixation.

La bouteille comprend une ouverture destinée à être recouverte par l'opercule de fermeture avant le montage du bouchon sur la bouteille, l'ouverture étant notamment réalisée au bout d'un goulot de la bouteille. On comprend alors que le filetage complémentaire est formé au niveau d'un pourtour externe du goulot de la bouteille, de telle sorte qu'il soit apte à coopérer avec le filetage de la paroi de fixation de la base du bouchon.

On comprend alors que selon cet exemple de réalisation de l'invention, on visse le bouchon sur la bouteille de telle sorte que la pointe rompt l'opercule de fermeture, le maintien du bouchon sur la bouteille au moyen du filetage et du filetage complémentaire assurant la fermeture hermétique du volume de la bouteille, en combinaison du dispositif de percement.

Selon une alternative de réalisation de l'invention, le moyen de fixation du bouchon à la bouteille est un montage en force de la base sur la bouteille.

Selon un exemple de l'invention, la face interne de la paroi de fixation peut comprendre une surépaisseur qui s'étend périphériquement autour de la pointe du dispositif de percement, la surépaisseur participant à retenir le bouchon sur la bouteille. Dit autrement, la surépaisseur participe à réduire un périmètre défini par la paroi de fixation, participant ainsi à réaliser le montage en force sur la bouteille.

Selon une caractéristique de l'invention, un joint d'étanchéité est disposé périphériquement autour de la pointe du dispositif de percement.

On comprend que le joint d'étanchéité augmente l'herméticité de la fermeture du volume de la bouteille par le bouchon, notamment lors du montage en force dudit bouchon sur la bouteille.

Selon une caractéristique de l'invention, le dispositif de percement comprend au moins 5% d'une matière minérale.

La matière minérale constituant au moins en partie le dispositif de percement permet d'augmenter la dureté du dispositif de percement. On renforce alors la capacité du dispositif de percement à rompre l'opercule de fermeture sans altérer sa propriété thermofusible.

Selon une caractéristique de l'invention, la bouteille de gaz comprend au moins en partie du dioxyde de carbone. Le dioxyde de carbone a notamment pour propriété de permettre l'extinction du feu se développant au sein du dispositif de stockage électrique, notamment en chassant au moins en partie l'oxygène présent dans le dispositif de stockage électrique.

Selon une caractéristique de l'invention, le dispositif de percement présente une température de fusion au moins supérieure à 80°C. On comprend qu'à partir de 80°C, le dispositif de percement va passer de l'état solide à l'état liquide, permettant ainsi le passage du gaz depuis le volume de la bouteille vers l'environnement extérieur de cette dernière, notamment au moyen de la paroi ajourée de la base. Selon un exemple, la température de fusion du dispositif de percement est supérieure à 80°C. De manière avantageuse la température de fusion du dispositif de percement est inférieure à 120°C

L'invention porte par ailleurs sur un dispositif de stockage électrique d'un véhicule automobile comprenant au moins une paroi périphérique et au moins un dispositif d'extinction d'un feu selon les caractéristiques précédentes.

Le dispositif de stockage électrique, autrement appelé pack de batteries, est notamment utilisé au sein des véhicules dits hybrides ou tout électriques, afin d'assurer la fourniture en électricité d'au moins un moteur électrique. La paroi périphérique participe alors à délimiter un espace dans lequel sont loger des cellules de stockage qui forment le dispositif de stockage électrique.

Selon une caractéristique du dispositif de stockage électrique, le dispositif d'extinction est logé dans la paroi périphérique. De manière plus précise, au moins une cavité est formée dans une épaisseur de la paroi périphérique du dispositif de stockage électrique, le dispositif d'extinction étant logé dans ladite cavité. Selon un exemple, cette cavité s'ouvre sur un bord de la paroi périphérique.

Selon une caractéristique du dispositif de stockage, la paroi périphérique comprend au moins une découpe, le bouchon comprenant une base pourvue d'une paroi ajourée apte au passage du gaz, la paroi ajourée de la base du bouchon du dispositif d'extinction étant en regard de la découpe.

On comprend que la découpe est réalisée au niveau de la cavité qui loge le dispositif d'extinction, de telle sorte que la découpe soit formée en regard de la paroi ajourée du bouchon. En d'autres termes, la découpe met en communication un volume de la cavité avec un espace interne du dispositif de stockage électrique où sont disposées les cellules électriques. On tire avantage d'une telle caractéristique en ce qu'elle permet d'augmenter la diffusion du gaz depuis la bouteille de gaz vers l'espace interne du dispositif de stockage électrique.

L'invention porte par ailleurs sur un procédé d'assemblage du dispositif d'extinction selon les caractéristiques précédentes, le procédé comprenant au moins une étape au cours de laquelle on dispose le bouchon en regard de l'opercule de fermeture fermé de la bouteille, puis à au moins une autre étape ultérieure, on fixe le bouchon sur la bouteille par un moyen de fixation, de telle sorte que le dispositif de percement rompt l'opercule de fermeture, le bouchon fermant hermétiquement le volume de la bouteille.

On comprend donc que la combinaison entre la structure du dispositif de percement et le maintien du bouchon grâce à son moyen de fixation assure la fermeture hermétique de la bouteille de gaz. On comprend également que la fonte du dispositif de percement, comprenant un matériau thermofusible, assure le passage du gaz depuis le volume de la bouteille jusqu'à un volume extérieur à la bouteille, ici l'espace interne du dispositif de stockage électrique, permettant d'éteindre le feu.

D'autres caractéristiques, détails et avantages de l'invention ressortiront plus clairement à la lecture de la description donnée ci-après à titre indicatif en relation avec des dessins dans lesquels :
[Fig 1] est une vue générale d'un dispositif de stockage électrique comprenant un dispositif d'extinction selon l'invention ;
[Fig 2] est une vue schématique du dispositif d'extinction de la figure 1 comprenant au moins un bouchon et une bouteille de gaz ;
[Fig 3] est une vue générale du bouchon du dispositif d'extinction de la figure 1 ;
[Fig 4] est une vue schématique en coupe longitudinale du bouchon du dispositif d'extinction de la figure 1 comprenant au moins un moyen de fixation à la bouteille selon un premier exemple de réalisation ;
[Fig 5] est une vue schématique en coupe longitudinale du bouchon du dispositif d'extinction de la figure 1 comprenant au moins un moyen de fixation à la bouteille selon un deuxième exemple de réalisation ;
[Fig 6] est une vue schématique d'au moins une partie du montage du bouchon du dispositif d'extinction de la figure 1 sur la bouteille de ce dernier ;
[Fig 7] est une vue schématique du dispositif d'extinction de la figure 1 dans lequel le dispositif de percement est dans un état fondu.

Il faut tout d'abord noter que si les figures exposent l'invention de manière détaillée pour sa mise en œuvre, ces figures peuvent bien entendu servir à mieux définir l'invention, le cas échéant. Il est également à noter que ces figures n'exposent que des exemples de réalisation de l'invention. Enfin, les mêmes repères désignent les mêmes éléments dans l'ensemble des figures.

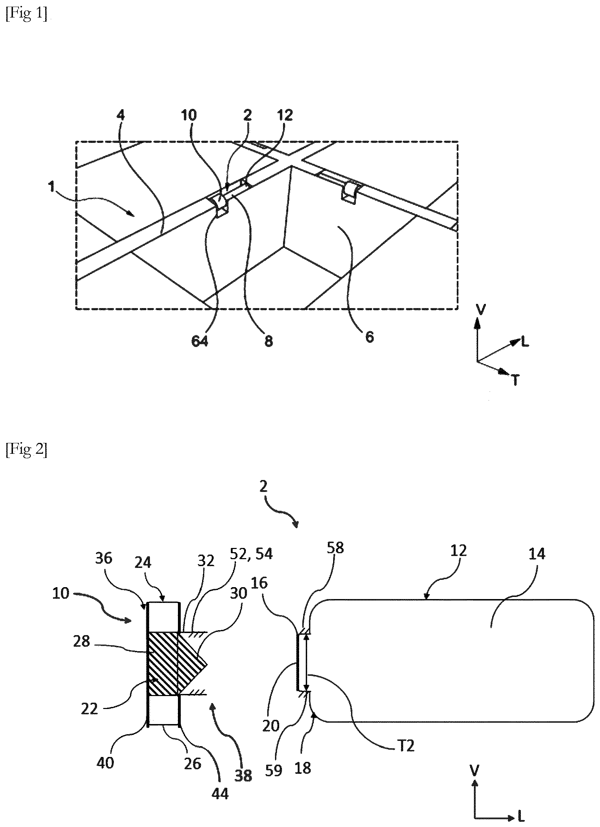

La figure 1 illustre un dispositif de stockage électrique 1, par exemple d'un véhicule automobile, dans lequel est logé un dispositif d'extinction 2 selon l'invention. Le dispositif de stockage électrique 1, autrement appelé pack de batteries, peut notamment être utilisé au sein d'un véhicule automobile hybride ou électrique pour lesquels il assure la fourniture en énergie électrique au moins d'un moteur électrique, non représenté, un tel moteur assurant la mise en mouvement du véhicule.

Le dispositif de stockage électrique 1 comprend au moins une paroi périphérique 4 qui délimite un espace 6 dudit dispositif de stockage, l'espace 6 pouvant loger par exemple des cellules électriques, non représentées. Tel que visible figure 1, la paroi périphérique 4 du dispositif de stockage électrique 1 comprend au moins une cavité 8 formée dans son épaisseur, le dispositif d'extinction 2 selon l'invention étant logé dans ladite cavité 8.

Le dispositif d'extinction 2 a pour fonction au moins d'empêcher la propagation du feu au sein du dispositif de stockage électrique 1, notamment en libérant au moins un gaz d'extinction du feu. De manière plus précise, le gaz peut être par exemple au moins du dioxyde de carbone permettant de limiter la propagation du feu en remplissant l'espace 6 du dispositif de stockage électrique 1, assurant ainsi l'appauvrissement en comburant de l'incendie.

Le dispositif d'extinction 2, visible à la figure 2 dans une configuration avant assemblage, comprend au moins un bouchon 10 et une bouteille 12 contenant au moins le gaz d'extinction du feu. De manière plus précise, la bouteille 12 du dispositif d'extinction 2 délimite un volume 14 dans lequel est contenu le gaz. La bouteille 12 de gaz s'étend principalement selon une direction longitudinale L et comprend au moins une ouverture 16 à une de ses extrémités longitudinales 18. On comprend alors que l'ouverture 16 a pour fonction d'une part, de permettre l'entrée du gaz dans le volume 14 de la bouteille 12, et d'autre part la sortie dudit gaz, notamment lorsque le dispositif d'extinction 2 est logé dans le dispositif de stockage électrique, sous certaines conditions environnementales qui seront détaillées par la suite.

Dans la configuration de la figure 2, le volume 14 de la bouteille 12 de gaz est clos au moyen d'un opercule de fermeture 20 venant en recouvrement de l'ouverture 16 de la bouteille 12 de gaz. On comprend alors que l'opercule de fermeture 20 a pour fonction d'empêcher la sortie du gaz en dehors du volume 14 de la bouteille 12. Selon un exemple non limitatif de l'invention, l'opercule de fermeture 20 est une feuille aisément déchirable telle que de l'aluminium ou encore un film de papier plastifié.

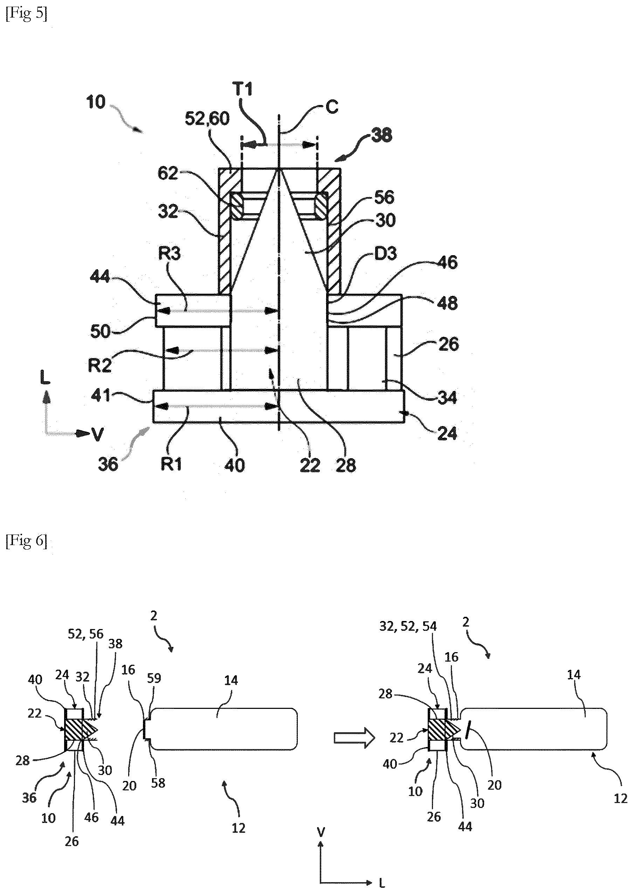

Le bouchon 10 du dispositif d'extinction 2 comprend au moins un dispositif de percement 22 et une base 24 pourvue d'une paroi ajourée 26. Le dispositif de percement 22 a alors pour fonction d'une part de rompre l'opercule de fermeture 20 de la bouteille 12 précédemment décrit, et d'autre part d'assurer au moins en partie la fermeture hermétique de la bouteille 12 une fois l'opercule de fermeture 20 rompu, en coopération avec la base 24 du bouchon 10. On entend alors par fermeture hermétique le fait que le bouchon 10 empêche le gaz de la bouteille 12 de sortir en dehors du volume 14 de cette dernière, vers l'espace du dispositif de stockage électrique. Une telle coopération entre le bouchon 10 et la bouteille 12 sera décrite plus loin dans la description détaillée, notamment à la figure 6.

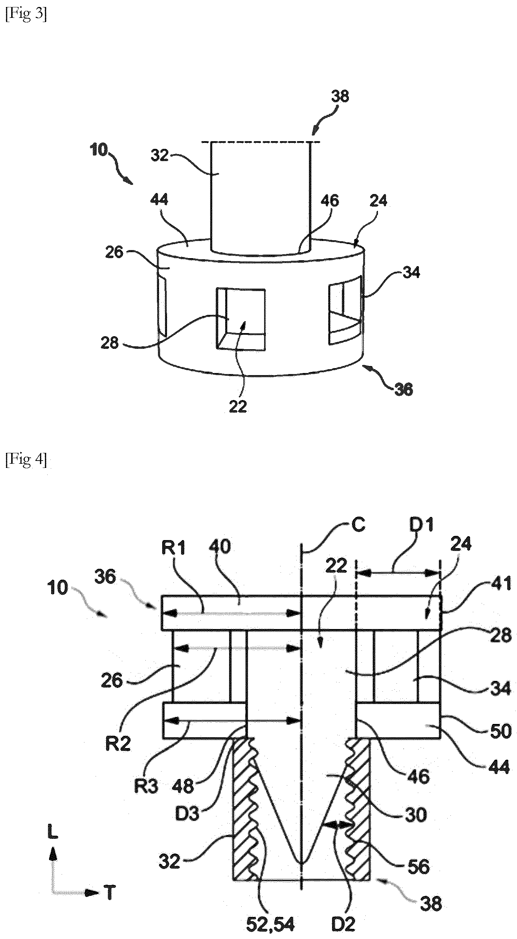

Le bouchon 10 va maintenant être décrit plus en détails en se reportant aux figures 3 à 5.

Le dispositif de percement 22 du bouchon 10 comprend au moins un corps 28 et une pointe 30 qui s'étend depuis le corps 28 du bouchon 10. De manière plus précise, la pointe 30 s'étend depuis le corps 28 du bouchon 10 suivant la direction longitudinale L de la bouteille 12 de gaz. On comprend alors que le dispositif de percement 22 présente une forme allongée selon la direction longitudinale L de la bouteille 12. Selon l'exemple de l'invention, le corps 28 du dispositif de percement 22 présente une forme de cylindre dont on définit un axe central C de révolution, parallèle à la direction longitudinale L de la bouteille. Ainsi, la pointe 30 présente une forme conique dont une extrémité formant un biseau du cône est positionnée dans l'axe central C du corps 28 et à l'opposé de ce dernier.

Selon l'invention, le corps 28 et la pointe 30 du dispositif de percement 22 comprennent tous deux un matériau thermofusible. Avantageusement, le corps 28 et la pointe 30 du dispositif de percement 22 sont entièrement constituées du matériau thermofusible. On entend par matériau thermofusible le fait que le corps 28 et la pointe 30 du dispositif de percement 22 sont aptes à passer d'un état solide à un état liquide sous l'effet d'une température déterminée. Ainsi, le corps 28 et la pointe 30 sont aptes à se ramollirent lorsque la température atteint au moins une température seuil, puis à fondre lorsque la température atteint au moins une température de fusion. La température de fusion à partir de laquelle le corps 28 et la pointe 30 fondent est ici au moins de 80°C. On comprend alors que lorsque la température présente dans l'espace du dispositif de stockage électrique atteint au moins la température de fusion du corps 28 et de la pointe 30, ces derniers changent d'état, tel qu'évoqué ci-dessus.

Selon des exemples non limitatifs de l'invention, le corps 28 et la pointe 30 peuvent être fait de polyéthylène, et/ou de polypropylène, et/ou de polyamide, et/ou de poly téréphtalate de butylène, et/ou de Poly Acrylonitrile butadiène styrène.

Selon un exemple de l'invention, le corps 28 et la pointe 30 peuvent comprendre au moins 5% d'une matière minérale. La matière minérale qui compose au moins en partie le corps 28 et la pointe 30 a alors pour effet de renforcer la structure de ces dernières, notamment en la durcissant. Une telle composition d'au moins 5% de matière minérale présente par ailleurs l'avantage de préserver la propriété thermofusible du corps 28 et de la pointe 30 du dispositif de percement 22. La rigidité obtenue au moyen de l'incorporation de la matière minérale garantie le percement de l'opercule de fermeture 20 par la pointe 30 quand le bouchon 10 est assemblé à la bouteille 12.

La base 24 du bouchon 10 comprend au moins la paroi ajourée 26 et au moins une paroi de fixation 32. De manière plus précise, la paroi ajourée 26 de la base 24 est disposée autour du corps 28 du dispositif de percement 22, tandis que la paroi de fixation 32 est disposée autour de la pointe 30 dudit dispositif de percement 22. On comprend alors que la paroi ajourée 26 de la base 24 s'étend en périphérie du corps 28 du dispositif de percement 22 principalement suivant la direction longitudinale L de la bouteille et de telle sorte qu'elle soit à une première distance D1 non nulle dudit corps 28, la première distance D1 étant prise selon une direction radiale du corps 28 par rapport à son axe central C, comme cela ressort de la figure 4.

On entend alors par paroi ajourée 26 le fait que cette dernière comprend au moins une fenêtre 34 traversante. De manière plus précise et tel qu'illustré selon l'exemple de l'invention, la paroi ajourée 26 comprend une pluralité de fenêtres 34 qui s'étendent périphériquement autour du corps 28 du dispositif de percement 22.

La paroi de fixation 32 de la base 24 s'étend périphériquement autour de la pointe 30 du dispositif de percement 22, principalement suivant la direction longitudinale L de la bouteille. De manière plus précise, la paroi de fixation 32 s'étend au moins en partie à une deuxième distance D2 non nulle de la pointe 30, la deuxième distance D2 étant prise suivant la direction radiale du corps 28 suivant son axe central C. La forme de la pointe 30 étant conique, on comprend que la deuxième distance D2 qui sépare la pointe 30 de la paroi de fixation 32 augmente à mesure que l'on s'éloigne du corps 28 du dispositif de percement 22, selon la direction longitudinale L de la bouteille. Par ailleurs, la deuxième distance D2 est strictement inférieure à la première distance D1 qui sépare le corps 28 du dispositif de percement 22 et la paroi ajourée 26.

On définit une première extrémité 36 du bouchon 10 et une deuxième extrémité 38 du bouchon 10, opposées l'une de l'autre, suivant la direction longitudinale L de la bouteille de gaz. La première extrémité 36 correspond alors à l'extrémité localisée au niveau de la paroi ajourée 26 de la base 24, tandis que la deuxième extrémité 38 correspond à l'extrémité au niveau de la paroi de fixation 32 de la base 24.

Un disque d'extrémité 40 de la base 24 est disposé au niveau de la première extrémité 36 du bouchon 10. Le disque d'extrémité 40 est alors configuré pour fermer la première extrémité 36 du bouchon 10, de telle sorte que la pluralité de fenêtres 34 constitue l'unique communication fluidique entre un volume interne au bouchon délimité par la paroi ajourée 26 et un environnement extérieur au bouchon 10. Le disque d'extrémité 40 comprend un bord périphérique externe 41 qui présente un rayon de disque d'extrémité R1 au moins égal à un rayon de paroi R2 définit par la paroi ajourée 26, le rayon externe de disque d'extrémité R1 et le rayon de paroi R2 étant définis par rapport à l'axe central C du corps 28 du dispositif de percement 22. On comprend alors que le disque d'extrémité 40 est disposé en recouvrement d'une extrémité de la paroi ajourée 26, au niveau de la première extrémité 36 du bouchon 10.

On comprend par ailleurs que dans une configuration où la température dans l'espace du dispositif de stockage électrique atteint au moins la température de fusion, le dispositif de percement 22 fond et permet une circulation du gaz vers les fenêtres 34.

La base 24 du bouchon 10 comprend par ailleurs au moins un disque de liaison 44, disposé entre la paroi ajourée 26 et la paroi de fixation 32 de la base 24. Dit autrement, le disque de liaison 44 s'étend radialement en périphérique du dispositif de percement 22, suivant l'axe central C du corps et de telle sorte qu'il relie la paroi ajourée 26 à la paroi de fixation 32. Le disque de liaison 44 comprend par ailleurs un orifice circulaire 46 dont un bord périphérique intérieur 48 s'étend autour du corps 28 du dispositif de percement 22. Le bord périphérique intérieur 48 est notamment ajusté autour du corps 28, de telle sorte que ledit bord périphérique intérieur 48 et le corps 28 soient en contact l'un de l'autre, c'est-à-dire à une troisième distance D3 nulle, mesurée suivant la direction radiale du corps 28 par rapport à son axe central C. Selon l'exemple illustré de l'invention, le disque de liaison 44 présente un rayon de disque de liaison R3 pris entre l'axe central C et un bord externe 50 du disque de liaison 44 au moins égale au rayon de paroi R2 définit précédemment.

On comprend alors de ce qui précède que la disposition particulière du disque de liaison 44 autour du corps 28 du dispositif de percement 22 permet de bloquer la circulation du gaz entre un volume délimité par la paroi de fixation 32 et le volume délimité par la paroi ajourée 26.

Selon l'invention, la base 24 du bouchon 10 comprend au moins un matériau thermorésistant. On entend alors par matériau thermorésistant, le fait que la base 24 est apte à résister à des températures élevées, strictement supérieure à la température de fusion du dispositif de percement 22 exposée précédemment. De manière plus précise, le matériau thermorésistant selon l'invention est apte à résister à une température au moins supérieure à 250°C, température qui ne devrait pas être atteinte puisque la fusion du dispositif de percement aura préalablement étouffé l'incendie. Selon des exemples non limitatifs de l'invention, le matériau thermorésistant peut être une matière plastique de type polyétheréthercétone, et/ou polyimide et/ou en époxy.

Selon une caractéristique de l'invention, le matériau thermorésistant de la base 24 du bouchon 10 peut comprendre une matière minérale. La matière minérale constituant au moins en partie de la base 24 permet d'augmenter les propriétés mécaniques et la tenue aux hautes températures de cette dernière.

Toujours selon l'invention, la base 24 comprend au moins un moyen de fixation 52 du bouchon 10 à la bouteille 12 de gaz. Ainsi, selon un premier exemple de l'invention visible à la figure 4, le moyen de fixation 52 du bouchon 10 est un filetage 54, ici un filetage interne, formé sur la paroi de fixation 32 de la base 24. De manière plus précise, on définit une face interne 56 de la paroi de fixation 32 comme étant une face de la paroi de fixation 32 tournée vers la pointe 30 du dispositif de percement 22. La face interne 56 comprend alors au moins le filetage 54 apte à coopérer avec un filetage complémentaire 58 formé au niveau de l'ouverture 16 de la bouteille 12, tel que visible à la figure 2. Le filetage complémentaire 58 est ici réalisé sur un pourtour externe d'un goulot 59 de la bouteille 12.

Selon un deuxième exemple du moyen de fixation 52, visible en figure 5, la fixation du bouchon 10 sur la bouteille 12 de gaz est un montage en force au moins de la paroi de fixation 32 sur le goulot 59 de la bouteille. Il convient de considérer que dans la suite de la description, seules les caractéristiques distinctes entre le deuxième mode de réalisation et le premier mode de réalisation, et notamment le moyen de fixation 52, feront l'objet d'une discussion détaillée. Pour les éléments communs, il conviendra de se reporter à la description ci-dessus.

Une surépaisseur 60 s'étend périphériquement depuis la face interne 56 de la paroi de fixation 32. De manière plus précise, la surépaisseur 60 s'étend depuis la face interne 56 au niveau de la deuxième extrémité 38 du bouchon 10 et périphériquement autour de la pointe 30 du dispositif de percement 22. La surépaisseur 60 a alors pour fonction de diminuer un diamètre interne T1 de la paroi de fixation 32 afin de permettre le montage en force de ladite paroi de fixation 32 sur le goulot 59 de la bouteille 12 de gaz, ledit goulot 59 présentant un diamètre de goulot T2, visible à la figure 2, strictement supérieur au diamètre interne T1 de la paroi de fixation 32.

Selon l'exemple de l'invention illustré de la figure 5, un joint d'étanchéité 62 peut être disposé dans le volume délimité par la paroi de fixation, entre la surépaisseur 60 de ce dernier et le disque de liaison 44 décrit précédemment. De manière plus précise, le joint d'étanchéité 62 s'étend périphériquement autour de la pointe 30 du dispositif de percement 22. On comprend alors que le joint d'étanchéité 62 participe à former une étanchéité au gaz entre le volume de la bouteille et le volume délimité par la base 24, lorsque le bouchon 10 est fixé sur la bouteille.

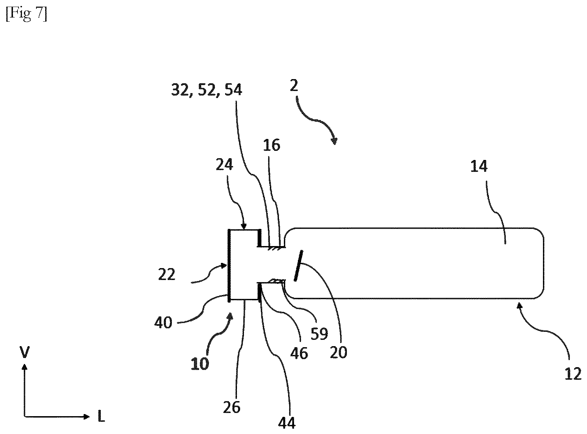

Le procédé d'assemblage du dispositif d'extinction 2 va maintenant être décrit plus en détail au moyen de la figure 6 et de la figure 7.

A un état initial dans lequel le bouchon 10 et la bouteille 12 de gaz décrits précédemment sont séparés l'un de l'autre, tel que visible à la figure 6, l'opercule de fermeture 20 de ladite bouteille 12 ferme de manière étanche le volume 14 de la bouteille 12 contenant le gaz. Le procédé comprend alors au moins une étape au cours de laquelle on dispose le bouchon 10 en regard de l'ouverture 16 de la bouteille 12 portant l'opercule de fermeture 20. De manière plus précise, on dispose la deuxième extrémité 38 du bouchon 10 en regard de l'ouverture 16 de la bouteille 12 de gaz. Ainsi, la pointe 30 du dispositif de percement 22 est disposée en face de l'opercule de fermeture 20 de la bouteille 12.

Par la suite, à une étape ultérieure on fixe le bouchon 10 sur l'ouverture 16 de la bouteille 12 via le moyen de fixation 52 formé sur la paroi de fixation 32 de la base 24. Ainsi, dans le cas où le moyen de fixation 52 correspond au filetage 54 formé sur la face interne 56 de la paroi de fixation 32, on visse le bouchon 10 sur le goulot 59 de la bouteille 12 au moyen du filetage complémentaire 58 formé sur ledit goulot 59. De manière plus précise, on visse le bouchon 10 sur ce goulot 59 au moins jusqu'à ce que la pointe 30 du dispositif de percement 22 rompt l'opercule de fermeture 20 disposé en recouvrement de l'ouverture 16 de la bouteille 12.

La structure particulière du bouchon 10, et notamment l'étanchéité entre le volume délimité par la paroi de fixation 32 et le volume délimité par la paroi ajourée 26, permet de conserver l'étanchéité de la bouteille 12 de gaz. En d'autres termes, bien que l'opercule de fermeture 20 de la bouteille 12 soit rompu et permette le passage du gaz au travers de l'ouverture 16 de ladite bouteille 12, la structure du bouchon 10 décrite précédemment et le maintien en position de ce dernier sur le goulot 59, assure l'herméticité de la fermeture de ladite bouteille 12.

Selon une disposition alternative du dispositif d'extinction, on peut prévoir de fixer le bouchon sur la bouteille de telle sorte que le dispositif de percement clos intégralement l'ouverture de la bouteille. Ainsi, la pointe du dispositif de percement s'étend dans le volume de la bouteille jusqu'à rencontrer un bord de la bouteille qui délimite l'ouverture. On augmente ainsi la clôture hermétique de la bouteille de gaz.

Lorsque le dispositif d'extinction 2 est positionné dans la cavité 8 du dispositif de stockage électrique 1 tel que visible à la figure 1, l'augmentation de la température au sein de l'espace 6 du dispositif de stockage 1 au moins jusqu'à la température de fusion, a pour effet de provoquer la fonte du dispositif de percement 22. De la sorte, le changement d'état du dispositif de percement 22 depuis l'état solide au moins jusqu'à l'état liquide a pour effet de modifier les propriétés d'étanchéité du bouchon 10.

Dit autrement, la fonte du dispositif de percement, tel que visible à la figure 7, a pour effet d'autoriser la circulation du gaz, notamment au niveau du disque de liaison 44 et de son orifice circulaire 46. En effet, la fonte du dispositif de percement génère un espace au moins entre le bord périphérique intérieur 48 et le dispositif de percement 22, l'espace entre ces derniers augmentant à mesure que le dispositif de percement fond. Dit autrement, le bord périphérique intérieur 48 de l'orifice circulaire 46 et le dispositif de percement 22 ne sont plus en contact l'un de l'autre.

On comprend alors que les fenêtres 34 formées dans la paroi ajourée 26 ont pour fonction de permettre la diffusion du gaz en dehors du bouchon 10, après avoir traversé l'orifice circulaire 46 du disque de liaison 44.

Selon une caractéristique avantageuse de l'invention visible à la figure 1, la paroi périphérique 4 du dispositif de stockage électrique 1 comprend au moins une découpe 64, qui s'ouvre sur la cavité 8 logeant le dispositif d'extinction 2, de telle sorte que la découpe 64 soit formée au moins en partie en regard de la paroi ajourée de la base du dispositif d'extinction 2. On facilite ainsi la diffusion du gaz depuis le volume de la bouteille vers l'espace 6 du dispositif de stockage électrique 1.

On comprend que le procédé d'assemblage ainsi que les caractéristiques structurelles et fonctionnelles afférentes au bouchon 10 qui viennent d'être décrites avec la figure 6, la figure 7 et la figure 1, s'appliquent *mutatis mutandis* lorsque le moyen de fixation est le montage en force du bouchon sur l'ouverture de la bouteille de gaz tel que décrit à la figure 5.

On tire avantage du dispositif d'extinction tel qu'il vient d'être décrit en ce qu'il permet par des moyens simples et inhérents à sa structure, de fermer hermétiquement le volume de la bouteille contenant le gaz lorsque le dispositif de stockage est dans des conditions normales de fonctionnement, c'est-à-dire lorsque la température est en dessous de la température de fusion du dispositif de percement, tout en permettant la libération du gaz dans l'espace dudit dispositif de stockage électrique lorsque la température dépasse la température de fusion du dispositif de percement.

L'invention ne saurait toutefois se limiter aux moyens et configurations exclusivement décrits et illustrés, et s'applique également à tous moyens ou configurations, équivalents et à toute combinaison de tels moyens ou configurations.

## Revendications

1. Dispositif d'extinction (2) d'un feu dans un dispositif de stockage électrique (1) d'un véhicule, le dispositif d'extinction (2) comprenant au moins un bouchon (10) et une bouteille (12) contenant au moins un gaz d'extinction du feu, la bouteille (12) comprenant un opercule de fermeture (20) et délimitant un volume (14) contenant le gaz, le bouchon (10) comprenant au moins un dispositif de percement (22), le dispositif d'extinction (2) étant **caractérisé en ce que** le dispositif de percement (22) est en un matériau au moins partiellement thermofusible, le bouchon (10) étant apte à être solidarisé à la bouteille (12) de telle sorte que le dispositif de percement (22) rompt l'opercule de fermeture (20) de ladite bouteille (12) et que le bouchon (10) ferme hermétiquement le volume (14) de la bouteille (12), dans lequel le dispositif de percement (22) comprend au moins un corps (28) et une pointe (30) comprenant tous deux un matériau thermofusible, dans lequel le bouchon (10) comprend une base (24) pourvue d'une paroi ajourée (26) apte au passage du gaz, la base (24) comprenant au moins un matériau thermorésistant, la paroi ajourée (26) étant disposée autour du corps (28) du dispositif de percement (22) et la base (24) comprenant au moins un moyen de fixation (52) du bouchon (10) à la bouteille (12), dans lequel la base (24) comprend au moins une paroi de fixation (32) disposée autour de la pointe (30) du dispositif de percement (22), le moyen de fixation (52) du bouchon (10) étant un filetage (54) formé sur la paroi de fixation (32) apte à coopérer avec un filetage complémentaire (58) formé sur la bouteille (12).

2. Dispositif d'extinction (2) selon la revendication 1, dans lequel le moyen de fixation (52) du bouchon (10) à la bouteille (12) est un montage en force de la base (24) sur la bouteille (12).

3. Dispositif d'extinction (2) selon l'une quelconque des revendications précédentes, dans lequel le dispositif de percement (22) comprend au moins 5% d'une matière minérale.

4. Dispositif de stockage électrique (1) d'un véhicule automobile comprenant au moins une paroi périphérique (4) et au moins un dispositif d'extinction (2) d'un feu selon l'une quelconque des revendications 1 à 3.

5. Dispositif de stockage électrique (1) selon la revendication précédente, dans lequel le dispositif d'extinction (2) est logé dans la paroi périphérique (4).

6. Dispositif de stockage électrique (1) selon l'une quelconque des revendications 4 ou 5, dans lequel la paroi périphérique (4) comprend au moins une découpe (64), le bouchon (10) comprenant une base (24) pourvue d'une paroi ajourée (26) apte au passage du gaz, la paroi ajourée (26) de la base (24) du bouchon (10) du dispositif d'extinction (2) étant en regard de la découpe (64).

7. Procédé d'assemblage du dispositif d'extinction (2) selon l'une quelconque des revendications 1 à 3, le procédé comprenant au moins une étape au cours de laquelle on dispose le bouchon (10) en regard de l'opercule de fermeture (20) fermé de la bouteille (12), puis à au moins une autre étape ultérieure, on fixe le bouchon (10) sur la bouteille (12) par un moyen de fixation (52), de telle sorte que le dispositif de percement (22) rompt l'opercule de fermeture (20), le bouchon (10) fermant hermétiquement le volume (14) de la bouteille (12).

## Patentansprüche

1. Vorrichtung zum Löschen (2) eines Feuers in einer elektrischen Speichervorrichtung (1) eines Fahrzeugs, wobei die Löschvorrichtung (2) mindestens eine Kappe (10) und eine Flasche (12), die mindestens ein Feuerlöschgas enthält, umfasst, wobei die Flasche (12) einen Verschlussdeckel (20) umfasst und ein Volumen (14) begrenzt, welches das Gas enthält, wobei die Kappe (10) mindestens eine Einstechvorrichtung (22) umfasst, wobei die Löschvorrichtung (2) **dadurch gekennzeichnet ist, dass** die Einstechvorrichtung (22) aus einem wenigstens teilweise heißschmelzbaren Material besteht, wobei die Kappe (10) geeignet ist, mit der Flasche (12) fest verbunden zu werden, derart, dass die Einstechvorrichtung (22) den Verschlussdeckel (20) der Flasche (12) zerbricht und dass die Kappe (10) das Volumen (14) der Flasche (12) hermetisch verschließt, wobei die Einstechvorrichtung (22) mindestens einen Körper (28) und eine Spitze (30) umfasst, die beide ein heißschmelzbares Material umfassen, wobei die Kappe (10) einen Sockel (24) umfasst, der mit einer durchbrochenen Wand (26) versehen ist, die für das Hindurchströmen des Gases geeignet ist, wobei der Sockel (24) mindestens ein hitzebeständiges Material umfasst, die durchbrochene Wand (26) um den Körper (28) der Einstechvorrichtung (22) herum angeordnet ist und der Sockel (24) mindestens ein Mittel zur Befestigung (52) der Kappe (10) an der Flasche (12) umfasst, wobei der Sockel (24) mindestens eine Befestigungswand (32) umfasst, die um die Spitze (30) der Einstechvorrichtung (22) herum angeordnet ist, wobei das Mittel zur Befestigung (52) der Kappe (10) ein an der Befestigungswand (32) ausgebildetes Gewinde (54) ist, das geeignet ist, mit einem an der Flasche (12) ausgebildeten komplementären Gewinde (58) zusammenzuwirken.

2. Löschvorrichtung (2) nach Anspruch 1, wobei das Mittel zur Befestigung (52) der Kappe (10) an der Flasche (12) eine kraftschlüssige Montage des Sockels (24) auf der Flasche (12) ist.

3. Löschvorrichtung (2) nach einem der vorhergehenden Ansprüche, wobei die Einstechvorrichtung (22) mindestens 5 % eines mineralischen Materials umfasst.

4. Elektrische Speichervorrichtung (1) eines Kraftfahrzeugs, welche mindestens eine Umfangswand (4) und mindestens eine Vorrichtung zum Löschen (2) eines Feuers nach einem der Ansprüche 1 bis 3 umfasst.

5. Elektrische Speichervorrichtung (1) nach dem vorhergehenden Anspruch, wobei die Löschvorrichtung (2) in der Umfangswand (4) untergebracht ist.

6. Elektrische Speichervorrichtung (1) nach einem der Ansprüche 4 oder 5, wobei die Umfangswand (4) mindestens einen Ausschnitt (64) umfasst, wobei die Kappe (10) einen Sockel (24) umfasst, der mit einer durchbrochenen Wand (26) versehen ist, die für das Hindurchströmen des Gases geeignet ist, wobei sich die durchbrochene Wand (26) des Sockels (24) der Kappe (10) der Löschvorrichtung (2) gegenüber dem Ausschnitt (64) befindet.

7. Verfahren zum Zusammenbau der Löschvorrichtung (2) nach einem der Ansprüche 1 bis 3, wobei das Verfahren mindestens einen Schritt umfasst, in dem die Kappe (10) gegenüber dem verschlossenen Verschlussdeckel (20) der Flasche (12) angeordnet wird, wobei dann in mindestens einem weiteren, späteren Schritt die Kappe (10) auf der Flasche (12) durch ein Befestigungsmittel (52) befestigt wird, derart, dass die Einstechvorrichtung (22) den Verschlussdeckel (20) zerbricht, wobei die Kappe (10) das Volumen (14) der Flasche (12) hermetisch verschließt.

## Claims

1. Extinguishing device (2) for extinguishing a fire in an electrical storage device (1) of a vehicle, the extinguishing device (2) comprising at least a cap (10) and a bottle (12) containing at least a fire-extinguishing gas, the bottle (12) having a sealing membrane (20) and delimiting a volume (14) containing the gas, the cap (10) comprising at least one piercing device (22), the extinguishing device (2) being **characterized in that** the piercing device (22) is made from an at least partially hot-melt material, the cap (10) being able to be secured to the bottle (12) so that the piercing device (22) ruptures the sealing membrane (20) of said bottle (12) and so that the cap (10) hermetically seals the volume (14) of the bottle (12), wherein the piercing device (22) comprises at least a body (28) and a spike (30) both containing a hot-melt material, wherein the cap (10) comprises a base (24) provided with a perforated wall (26) able to allow the gas to pass, the base (24) containing at least a heat-resistant material, the perforated wall (26) being positioned around the body (28) of the piercing device (22) and the base (24) comprising at least one fixing means (52) for fixing the cap (10) to the bottle (12), wherein the base (24) comprises at least one fixing wall (32) arranged around the spike (30) of the piercing device (22), the fixing means (52) belonging to the cap (10) being a screw thread (54) formed on the fixing wall (32) and able to collaborate with a complementary screw thread (58) formed on the bottle (12).

2. Extinguishing device (2) according to Claim 1, wherein the fixing means (52) for fixing the cap (10) to the bottle (12) is a force-fitting of the base (24) onto the bottle (12).

3. Extinguishing device (2) according to either one of the preceding claims, wherein the piercing device (22) contains at least 5% of a mineral material.

4. Electrical storage device (1) for a motor vehicle comprising at least a peripheral wall (4) and at least one fire extinguishing device (2) according to any one of Claims 1 to 3.

5. Electrical storage device (1) according to the preceding claim, wherein the extinguishing device (2) is housed in the peripheral wall (4).

6. Electrical storage device (1) according to either one of Claims 4 and 5, wherein the peripheral wall (4) comprises at least one cutout (64), the cap (10) comprising a base (24) provided with a perforated wall (26) able to allow the gas to pass, the perforated wall (26) of the base (24) of the cap (10) of the extinguishing device (2) being positioned facing the cutout (64).

7. Method for assembling the extinguishing device (2) according to any one of Claims 1 to 3, the method comprising at least a step during which the cap (10) is positioned facing the sealed sealing membrane (20) of the bottle (12), and then, in at least one other later step, the cap (10) is fixed onto the bottle (12) by a fixing means (52) so that the piercing device (22) ruptures the sealing membrane (20), the cap (10) then hermetically sealing the volume (14) of the bottle (12).
